# DEMANDE DE BREVET EUROPEEN

(11) **EP 4 650 641 A1**
(43) Date de publication de la demande: **19.11.2025**
(21) Numéro de dépôt: 25175934.6
(22) Date de dépôt: 13.05.2025
(51) Int. Cl.: F16L 37/092

(54) **DISPOSITIF DE RACCORDEMENT D'UN TUBE**

(30) Priorité: 17.05.2024 FR 2405094
(71) Demandeur: A. RAYMOND ET CIE, 38000 Grenoble (FR)
(72) Inventeur: GUIBERT, Kévin, 38000 GRENOBLE (FR); TURLOT, Titus, 38000 GRENOBLE (FR)
(74) Mandataire: IP Trust

(57) **Abrégé**

La présente invention concerne un dispositif de raccordement pourvu d'un témoin de bon raccordement. Notamment, le témoin en question est un moyen d'émission sonore, plus particulièrement un sifflement, qui lorsqu'il est activé révèle un défaut de connexion, et notamment une fuite, du raccordement. L'agencement prévu met également en œuvre des moyens de propreté configurés pour limiter, voire prévenir, l'entrée de poussières dans le dispositif de raccordement. Afin de combiner de manière efficace les moyens d'émission sonore et les moyens de propreté, la présente invention propose de ménager un ou plusieurs chemins d'échappement contournant les moyens de propreté.

## Description

### DOMAINE DE L'INVENTION

La présente invention se rapporte au domaine des dispositifs de raccordement fluidique mis en œuvre dans les systèmes de circulation et/ou de distribution de fluides.

Plus particulièrement, la présente invention concerne un dispositif de raccordement d'un tube et pourvu de moyens permettant de vérifier le bon état de connexion du tube au dispositif de raccordement.

### ARRIERE PLAN TECHNOLOGIQUE DE L'INVENTION

Les dispositifs de raccordement fluidique sont aujourd'hui largement répandus dans les véhicules automobiles et les véhicules de transport routier. Ces dispositifs de raccordement fluidique sont notamment mis en œuvre pour assurer la circulation et/ou la distribution d'un fluide au sein de ces véhicules.

Par ailleurs, afin d'assurer des cadences d'assemblage compatibles avec les exigences des industries automobile et/ou des véhicules de transport routier, il peut être requis de disposer de dispositifs de raccordement fluidique permettant des connexions rapides et de moyens de vérification de leur montage.

A cet égard, le document [1] cité à la fin de la description divulgue un dispositif de raccordement permettant la connexion fluidique d'un tube ou d'un conduit, et qui comprend un témoin de montage visuel.

Notamment, ce dispositif de raccordement comprend un corps creux sensiblement cylindrique et présentant un logement d'accueil débouchant sur une ouverture d'insertion. Une bague de verrouillage ainsi qu'un joint d'étanchéité sont par ailleurs disposés dans le logement d'accueil et agencés pour assujettir un tube inséré dans le logement d'accueil par l'ouverture d'insertion et selon un sens d'insertion.

Le dispositif de raccordement comprend également une cartouche susceptible d'être verrouillée dans l'une ou l'autre d'une première et d'une deuxième position dans le logement d'accueil. La cartouche initialement verrouillée dans la première position dépasse en partie du logement d'accueil par l'ouverture d'insertion. L'insertion d'une longueur prédéterminée dans le logement d'accueil, selon le sens d'insertion, permet le déverrouillage de la cartouche et son coulissement de la première position vers la deuxième position dans laquelle ladite cartouche se trouve entièrement intégrée dans le logement d'accueil.

L'insertion complète de la cartouche dans le logement d'accueil permet de conclure à la bonne connexion du tube avec le dispositif de raccordement. Il est toutefois des situations pour lesquelles les conditions d'illumination et/ou l'exiguïté des zones de raccordement sur les véhicules empêchent l'observation de la position de la cartouche et rendent ainsi inefficiente la fonction de témoin visuel de ladite cartouche.

De manière alternative, il a pu être envisagé de pourvoir le dispositif de raccordement d'un témoin sonore. Le document [2] cité à la fin de la description en divulgue un exemple. En particulier, le dispositif de raccordement décrit dans ce document comprend un témoin sonore formé par une épingle élastique configurée pour tressauter dès lors qu'une longueur prédéterminée du tube est enfoncée dans le dispositif de raccordement. Cependant, un environnement bruyant rend la détection sonore difficile.

Toujours de manière alternative, le document [3] cité à la fin de la description divulgue un dispositif de raccordement qui propose un agencement des lignes d'échappement. Notamment ces lignes d'échappement sont agencées, en cas de fuite de fluide, pour guider ledit fluide vers l'extérieur, et que l'écoulement de fluide dans les lignes d'échappement génère une onde sonore.

Les dispositifs de raccordement présentés dans ces documents ne permettent toutefois pas de limiter l'entrée de poussières et autres contaminants dans le dispositif.

Ainsi, un but de la présente invention est donc de proposer un dispositif de raccordement pourvu d'un indicateur de bonne connexion et pour lequel l'entrée de poussières et autres contaminants reste limitée.

Un autre but de la présente invention est de proposer un dispositif de raccordement qui reste d'utilisation simple et ergonomique.

### BREVE DESCRIPTION DE L'INVENTION

En vue de la réalisation, au moins en partie, de ces buts, l'objet de l'invention propose un dispositif de raccordement d'un tube comprenant :
- un corps principal définissant un logement présentant une symétrie de révolution et pourvu d'une ouverture permettant l'insertion d'un tube selon un sens d'insertion, le logement est délimité par une surface interne et comprend un premier épaulement formant un élargissement du logement selon le sens d'insertion ;
- une bague de maintien au moins partiellement insérée dans le logement par l'ouverture et qui comprend, selon le sens d'insertion, une base, par exemple circulaire, et un tronçon de maintien à symétrie de révolution d'un diamètre inférieur à l'étendue de la base, le tronçon de maintien étant pourvu sur sa surface latérale d'un collet d'encliquetage configuré pour permettre le maintien en prise par encliquetage de la bague de maintien dans le logement par coopération dudit collet avec le premier épaulement, ladite bague de maintien définissant un canal par lequel le tube est destiné à être inséré dans le logement ;
la bague de maintien est montée dans le logement avec un jeu axial non nul afin d'adopter soit une première position et soit une deuxième position, la première position imposant au collet d'être en appuis contre un premier épaulement selon un sens opposé au sens d'insertion, et la deuxième position imposant à la base d'être en appui, selon le sens d'insertion, contre un moyen de buté formé sur le corps principal, des chemins d'échappement sont par ailleurs ménagés dans l'espace formé entre la surface latérale et la surface interne, et agencés pour permettre l'échappement, vers l'extérieur, d'un fluide susceptible d'être présent dans la chambre en aval de la bague de maintien lorsque la bague, sous l'effet d'une pression susceptible d'être exercée par le fluide, est dans sa première position, les chemins d'échappement sont ménagés pour que l'écoulement dudit fluide dans lesdits chemins d'échappement génère l'émission d'une onde sonore.

Selon un mode de mise en œuvre, les chemins d'échappement comprennent un ou plusieurs perçages formés dans le collet d'encliquetage.

Selon un mode de mise en œuvre, les chemins d'échappement comprennent une ou plusieurs encoches formés sur un contour extérieur du collet d'encliquetage.

Selon un mode de mise en œuvre, les chemins d'échappement comprennent des rainures longitudinales formées sur la surface interne.

Selon un mode de mise en œuvre, ledit dispositif de raccordement comprend en outre guide pourvu d'un manchon qui s'étend à partir d'une extrémité libre dans le sens d'insertion, et qui est destiné à assurer le guidage du tube lors de l'insertion de ce dernier dans le logement.

Selon un mode de mise en œuvre, ledit dispositif de raccordement comprend moyen de verrouillage disposé en aval de la bague de maintien dans le logement et destiné à être en prise avec un tube inséré dans le logement.

Selon un mode de mise en œuvre, le moyen de verrouillage comprend une bague, dite bague de verrouillage.

Selon un mode de mise en œuvre, un joint d'étanchéité est disposé dans le logement en aval du moyen de verrouillage, le joint d'étanchéité est configuré pour assurer une étanchéité entre la surface interne et une surface latérale du tube susceptible d'être inséré dans le logement.

Selon un mode de mise en œuvre, un joint de propreté est disposé dans le canal, le joint de propreté est configuré permettre le retrait de saletés et/ou poussières susceptibles d'être présentes sur une surface latérale du tube lors de son insertion dans le logement, avantageusement, le joint de propreté est également configuré pour assurer une étanchéité entre une surface interne du tronçon de maintien et la surface latérale du tube susceptible d'être inséré dans le logement de manière à prévenir tout échappement de fluide susceptible d'être présent dans la chambre en aval de la bague de maintien lorsque la bague, sous l'effet d'une pression susceptible d'être exercée par le fluide, est dans sa première position..

Selon un mode de mise en œuvre, la base est configurée pour, lorsqu'elle est en appui contre les moyens de buté, limiter, voire prévenir, l'entrée de poussière dans le logement.

Selon un mode de mise en œuvre, les moyens de buté sont formés par un bord du corps principal délimitant l'ouverture du logement.

Selon un mode de mise en œuvre, les moyens de buté sont formée par un deuxième épaulement formé sur la surface interne.

L'invention concerne également un procédé de raccordement d'un tube avec un élément femelle au moyen du dispositif de raccordement selon la présente invention, ledit procédé comprenant l'exécution des étapes suivantes :
- le raccordement du dispositif de raccordement avec un élément femelle ;
- le raccordement d'un tube avec le dispositif de raccordement, ledit raccordement comprenant l'insertion du tube dans le logement selon le sens d'insertion via la bague ;
le procédé comprend en outre le choix d'un dispositif de raccordement pour lequel le ou les chemins d'échappement permettent l'émission d'un signal sonore dès lors qu'une fuite de fluide intervient.
Selon un mode de réalisation, le ou les chemins d'échappement sont dimensionnés pour permettre l'émission d'un signal sonore d'une intensité supérieure à 80 dB dès lors qu'une fuite de fluide intervient.

### BREVE DESCRIPTION DES FIGURES

D'autres caractéristiques et avantages de l'invention ressortiront de la description détaillée de l'invention qui va suivre en référence aux figures annexées sur lesquelles :
[Fig. 1] La figure 1 est une représentation schématique d'un dispositif de raccordement conforme à un exemple de réalisation de la présente invention, notamment, la figure 1 représente le dispositif de raccordement selon un plan de coupe passant par l'axe principal AA' dudit dispositif de raccordement ;
[Fig.2] La figure 2 est une représentation schématique du corps principal mis en œuvre dans l'exemple de la figure 1 et selon un plan de coupe passant par l'axe principal AA' dudit dispositif de raccordement ;
[Fig.3] La figure 3 est une représentation schématique de la bague de maintien mise en œuvre dans l'exemple de la figure 1 et selon un plan de coupe passant par l'axe principal AA' dudit dispositif de raccordement ;
[Fig.4] La figure 4 est une représentation schématique de la bague de maintien de la figure 3 et portant un joint de propreté ;
[Fig.5] La figure 5 est une représentation schématique et partielle selon un plan de coupe passant par l'axe principal AA', de la bague de maintien montée sur le corps principal, la bague de maintien étant dans la première position ;
[Fig.6] La figure 6 est une représentation schématique et partielle selon un plan de coupe passant par l'axe principal AA', de la bague de maintien montée sur le corps principal, la bague de maintien étant dans la deuxième position ;
[Fig.7] La figure 7 est une représentation schématique et partielle selon un plan de coupe passant par l'axe principal AA', d'un tube monté dans le dispositif de raccordement, ledit tube présentant une extrémité libre biseauté ;
[Fig.8] La figure 8 est une représentation schématique de la bague de maintien mise en œuvre dans l'exemple de la figure 1, et qui comprend une encoche de grande taille ;
[Fig.9] La figure 9 est une représentation schématique de la bague de maintien mise en œuvre dans l'exemple de la figure 1, et qui comprend des encoches de petite taille ;
[Fig.10] La figure 10 est une représentation schématique de la bague de maintien mise en œuvre dans l'exemple de la figure 1, et qui comprend des trous traversant le collet d'encliquetage selon la direction AA' ;
[Fig.11] La figure 11 est une représentation schématique de la bague de maintien mise en œuvre dans l'exemple de la figure 1, et qui comprend un trou traversant le collet d'encliquetage selon une direction radiale (figure 11) ;
[Fig.12] La figure 12 est une représentation schématique du corps principal mis en œuvre dans l'exemple de la figure 1 qui comprend des rainure formées sur sa surface interne ;
[Fig.13] La figure 13 est une représentation schématique du corps principal et d'une bague de maintien, ladite bague étant en butée contre un deuxième épaulement formé sur la surface interne du corps principal.

### DESCRIPTION DETAILLEE DE L'INVENTION

La présente invention concerne un dispositif de raccordement pourvu d'un témoin de bon raccordement. Notamment, le témoin en question est un moyen d'émission sonore, plus particulièrement un sifflement, qui lorsqu'il est activé révèle un défaut de connexion, et notamment une fuite, du raccordement. L'agencement prévu met également en œuvre des moyens de propreté configurés pour limiter, voire prévenir, l'entrée de poussières dans le dispositif de raccordement. Afin de combiner de manière efficace les moyens d'émission sonore et les moyens de propreté, la présente invention propose de ménager un ou plusieurs chemins d'échappement contournant les moyens de propreté.

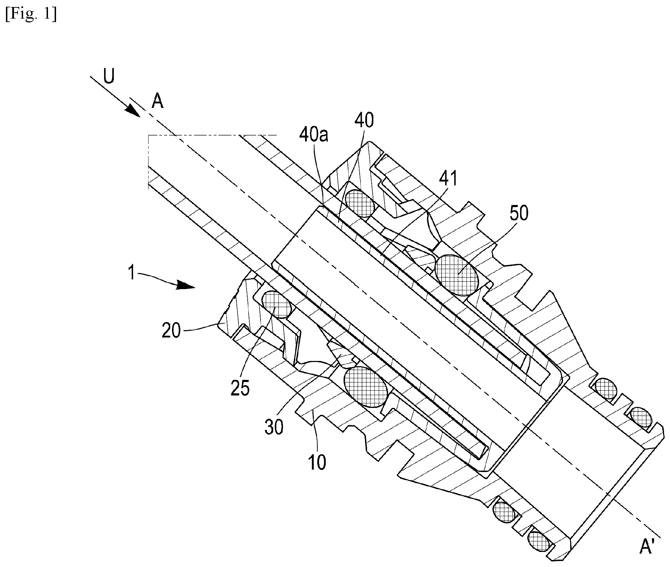

Ainsi, la figure 1 est une illustration, selon un plan de coupe longitudinal, d'un dispositif de raccordement susceptible d'être considéré dans le cadre de la présente invention.

Par « plan de coupe longitudinal », on entend l'intersection entre le dispositif de raccordement et un plan passant un axe d'élongation dudit dispositif.

Les principes exposés ci-après ne sont pas limités au seul agencement illustré dans cet exemple. Notamment, l'homme du métier, sur la base de ce qui suit, pourra envisager d'autres configurations.

Notamment, le dispositif de raccordement 1 comprend un corps principal 10, une bague de maintien 20, un moyen de verrouillage 30, éventuellement un guide 40, un joint d'étanchéité 50 (par exemple un joint torique).

Le corps principal 10 est de forme allongée selon un axe principal AA', et s'étend notamment d'une extrémité 10a vers une autre extrémité 10b.

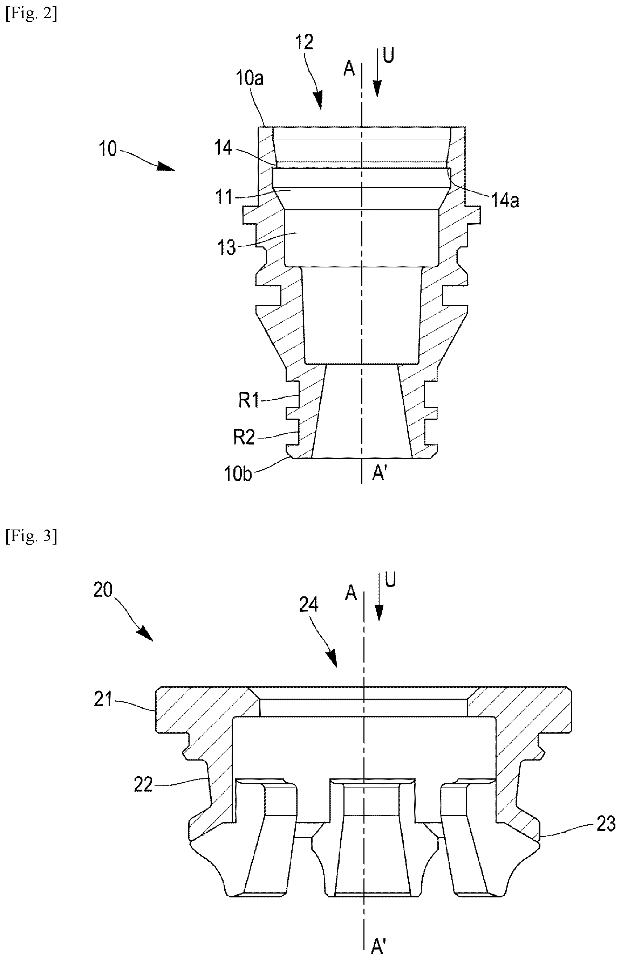

Le corps principal 10 définit un logement 11 débouchant par une ouverture 12 au niveau de l'extrémité 10a (figure 2). L'ouverture 12 permet notamment l'insertion d'un tube selon un sens d'insertion « u » porté par la direction définie par l'axe principal AA'. Le logement 12 est délimité par une surface interne 13 du corps principal 10 et qui présente une symétrie de révolution autour de l'axe principal AA'.

La surface extérieure du corps principal 10 peut comprendre une ou plusieurs rainures circonférentielles R1, R2 destinées à accueillir un ou plusieurs joints toriques permettant d'assurer une jonction étanche avec un élément femelle.

Le corps principal 10 comprend également un premier épaulement formant un élargissement de la surface interne selon le sens d'insertion. A cet égard, le premier épaulement peut être formé par une butée circonférentielle 14 formée sur la surface interne 13. Cette butée circonférentielle 14 peut notamment comprendre une nervure circonférentielle formée sur la surface interne et présentant une symétrie de révolution. Plus particulièrement, la nervure circonférentielle peut comprendre une surface annulaire 14a formant la buté selon un sens opposé au sens d'insertion « u ». Il est entendu, sans qu'il soit nécessaire de le préciser, que la surface annulaire 14a forme un épaulement, et notamment un épaulement conduisant à une augmentation du diamètre de la surface interne selon le sens d'insertion « u ».

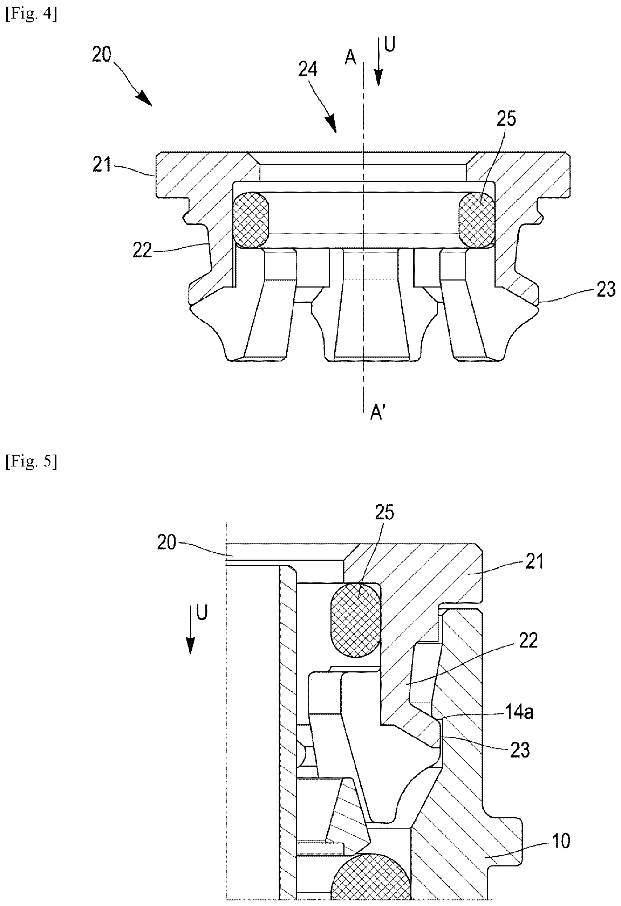

La figure 3 et la figure 4 sont des représentations de la bague de maintien 20. Plus particulièrement, la figure 3 représente la bague de maintien 20 isolée, tandis que la figure 4 représente la bague de maintien 20 sur laquelle est monté un joint de propreté 25 décrit dans la suite de l'énoncé de la présente invention. La bague de maintien 20, telle qu'illustré à la figure 1, est destinée à être au moins partiellement insérée dans le logement 11 par l'ouverture 12. Notamment, la bague de maintien 20 comprend, selon le sens d'insertion « u », une base 21, par exemple une base circulaire, et un tronçon de maintien 22 qui s'étend à partir de la base circulaire 21. La base 21 et le tronçon de maintien 22 peuvent présenter tous les deux une symétrie de révolution.

Par ailleurs, le tronçon de maintien 22 présente un diamètre inférieur à l'étendue de la base 21. En d'autres termes, si la base 21 est circulaire, le diamètre de cette dernière est supérieur au diamètre du tronçon de maintien 22.

Le tronçon de maintien 22 est pourvu, sur sa surface latérale, d'un collet d'encliquetage 23 configuré pour permettre le maintien en prise par encliquetage de la bague de maintien dans le logement. Notamment, et tel qu'illustré à la figure 1, le maintien en prise par encliquetage met en œuvre une coopération entre le collet d'encliquetage 23 et la surface annulaire 14a.

La bague de maintien 20 définit un canal 24 par lequel un tube est destiné à être inséré dans le logement 11. Il est entendu, sans qu'il soit nécessaire de le préciser, que le canal 24 s'étend coaxialement au logement.

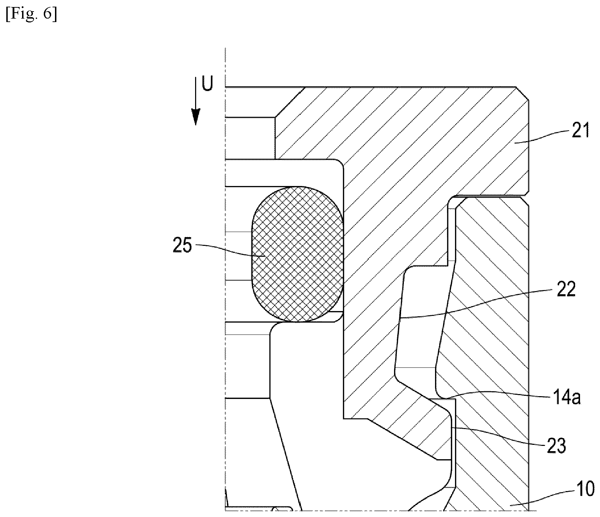

Par ailleurs, et tel qu'illustré à la figure 5 et à la figure 6, la bague de maintien 20 est montée dans le logement 11 avec un jeu axial non nul (par jeu axial, on entend un jeu selon l'axe principal AA'). Notamment, ce jeu permet à la bague de maintien d'adopter l'une ou l'autre d'une première position et d'une deuxième position, par exemple par déplacement selon la direction AA'.

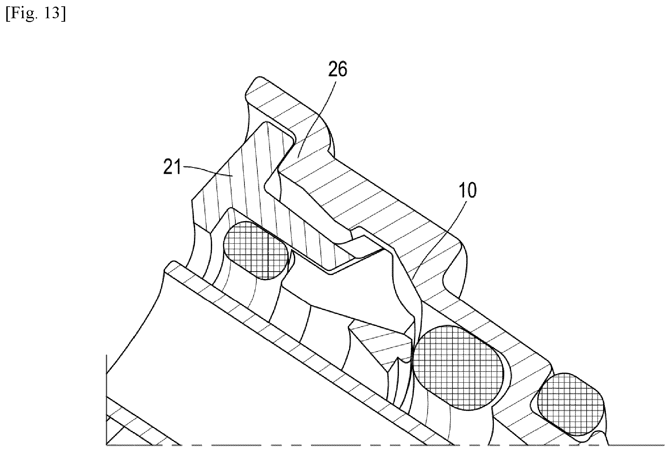

A cet égard, la première position est une position imposant au collet 23 d'être en appui contre le premier épaulement (et notamment contre la surface annulaire 14a) selon un sens opposé au sens d'insertion (figure 5). La deuxième position est une position pour laquelle la base 21 est en appui, selon le sens d'insertion, contre un moyen de buté formé sur le corps principal (figure 6). Notamment, et tel qu'illustré à la figure 6, le moyen de buté peut être formé par un bord du corps principal délimitant l'ouverture 12. De manière alternative, le moyen de buté peut comprendre un deuxième épaulement 26 formé dans le logement (figure 13). Cette dernière configuration permet de mieux limiter l'entrée de particules et autres contaminants dans le logement.

Selon la présente invention, la bague de maintien 20 peut être pourvue d'un joint de propreté 25. Plus particulièrement, le joint de propreté 25 peut être monté dans le canal 24 de la bague de maintien, et notamment retenu dans une gorge dudit canal 24.

Tel qu'illustré à la figure 1, le moyen de verrouillage 30 est disposé en aval de la bague de maintien 20 dans le logement 11 et destiné à être en prise avec un tube inséré dans le logement. Un moyen de verrouillage est notamment décrit dans le document [4] cité à la fin de la description. Notamment ce document décrit la mise en œuvre d'une bague de verrouillage qui peut être associée au moyen de verrouillage selon les termes de la présente invention.

De manière particulièrement avantageuse, le moyen de verrouillage comprend une bague, dite bague de verrouillage, permettant d'assujettir un tube susceptible d'être inséré dans le logement selon le sens d'insertion « u. » Plus particulièrement, la bague de verrouillage est agencée pour empêcher l'extraction du tube dès lors que ce dernier est inséré dans le logement 11 et se trouve en prise avec ladite bague de verrouillage.

A cet égard, la bague de verrouillage peut être pourvue de moyens d'accroche lui permettant d'être en prise avec le tube. Plus particulièrement, la bague de verrouillage peut présenter une section intérieure effilée permettant de griffer la surface extérieure du tube, et ainsi être en prise avec ce dernier.

Par « en prise », on entend deux éléments mécaniquement solidaires l'un de l'autre. L'expression « en prise » présente également une nature réciproque de sorte qu'un premier élément en prise avec un deuxième élément implique que le deuxième élément est en prise avec le premier élément. Ainsi, et tout au long de la description, dès lors que la bague de verrouillage est en prise avec le tube implique que le tube est en prise avec la bague de verrouillage.

La bague de maintien, disposée en amont de la bague de verrouillage selon le sens d'insertion « u », constitue un obstacle contre lequel la bague de verrouillage est susceptible de buter dès lors qu'elle est en prise avec le tube et qu'un effort de retrait selon un sens opposé au sens d'insertion est exercé sur ledit tube. En d'autres termes, un effort d'extraction, selon un sens d'extraction (opposé au sens d'insertion u), sur un tube avec lequel la bague de verrouillage est en prise, positionnera cette dernière en butée contre la bague de maintien et empêchera ainsi le retrait du tube.

Le dispositif de raccordement 1 selon la présente invention comprend également un guide 40.

En particulier, le guide 40 comprend un manchon 41 qui s'étend à partir d'une extrémité libre 40a selon le sens d'insertion u et de manière coaxiale au canal 24.

Plus particulièrement, le manchon présente un diamètre extérieur inférieur à celui du canal, et notamment inférieur au diamètre interne du tube. Ce dernier aspect permet ainsi, lors que de mise en place du tube, un insertion du manchon dans le tube. En d'autres termes, le manchon permet de guider le tube dans le logement.

Toujours selon la présente invention, le joint d'étanchéité 50 est disposé dans le logement en aval du moyen de verrouillage selon le sens d'insertion.

Ainsi, en fonctionnement, un tube 60 peut être inséré dans le canal 24 selon le sens d'insertion « u ». Au cours de son insertion, la surface externe du tube 60 se trouve en contact avec le joint de propreté 25 qui par frottement sur ladite surface retient toute les impuretés susceptibles d'être présentes sur la surface externe, tandis que le manchon pénètre (ou s'emmanche) dans le tube à de fins de guidage. Le joint de propreté assure également une étanchéité entre une paroi interne du canal et la surface externe du tube 60.

Lors de son insertion, le tube rencontre successivement le moyen de verrouillage, puis le joint d'étanchéité 50. Le moyen de verrouillage est notamment configuré pour, dès lors qu'il se trouve en contact avec la surface externe du tube, s'opposer au retrait de ce dernier du logement. Le joint d'étanchéité 50 est, pour sa part, configuré pour assurer une étanchéité entre la surface interne et une surface latérale du tube susceptible d'être inséré dans le logement 11.

Ainsi, dès lors que le montage tube - dispositif de raccordement est parcouru par un fluide sous pression, on peut observer un recul de la bague de verrouillage (déplacement selon un sens opposé au sens d'insertion), qui se positionne en buté contre la bague de maintien et notamment au niveau d'une extrémité libre du tronçon de maintien 23. Ce dernier mouvement a pour effet de plaquer le collet d'encliquetage 23 et la surface annulaire 14a.

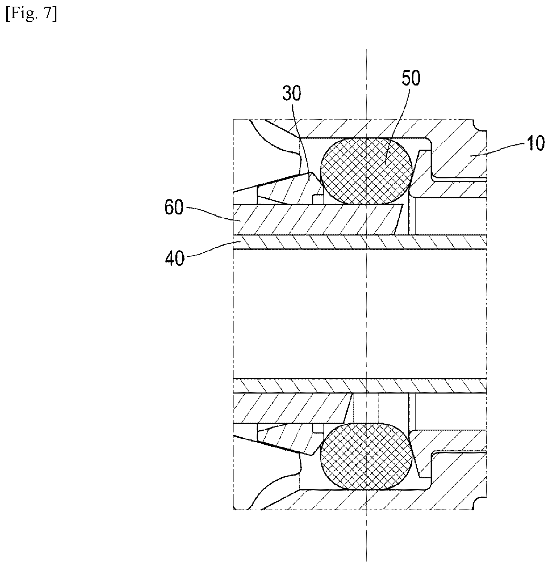

Aussi, il est des situations pour lesquelles le montage du tube dans le logement n'est pas étanche. De telles situations peuvent notamment intervenir lorsque le joint d'étanchéité n'est pas correctement, ou uniformément, compressé entre la surface interne du logement et la surface externe du tube. Par exemple, des défauts sur la surface externe du tube, ou encore la présence d'impuretés, peut altérer l'étanchéité du montage et conduire à une fuite de fluide sous pression. De manière alternative, une extrémité libre du tube avec un biseau (repéré par une flèche sur la figure 7) trop prononcé peut limiter le contact entre la surface externe du tube et le joint d'étanchéité, et ainsi générer un chemin de fuite de fluide sous pression.

Ainsi, dès lors que le montage n'est pas étanche, le fluide en pression peut s'échapper vers l'extérieur uniquement par l'espace ménagé entre corps principal et la bague de maintien (en effet, tel que précisé précédemment, le joint de propreté prévient tout écoulement de fluide dans l'espace ménagé entre la surface interne du canal et la surface externe du tube).

Ainsi, la présente invention prévoit la mise en œuvre d'un ou plusieurs chemins d'échappement ménagés dans l'espace formé entre la surface latérale de la bague de maintien et la surface interne du logement. Notamment, ce ou ces chemins d'échappement sont agencés pour permettre l'échappement, vers l'extérieur, d'un fluide susceptible d'être présent dans la chambre en aval de la bague de maintien lorsque ladite bague de maintien, sous l'effet d'une pression susceptible d'être exercée par le fluide, est dans sa première position.

Notamment, et selon la présente invention, le ou les chemins d'échappement sont ménagés pour que l'écoulement dudit fluide dans lesdits chemins d'échappement génère l'émission d'une onde sonore, et plus particulièrement une onde sonore d'une énergie au moins égale 80 Décibels.

Une telle onde sonore peut notamment être obtenue en créant un passage pour le fluide sous pression permettent un débit suffisamment important pour décomprimer le fluide sous pression de manière à générer une onde sonore.

Le dimensionnement des chemins d'échappement suit les lois de la pneumatique (le rapport de pression et la section de passage limite le débit) et de l'acoustique (la puissance de l'onde sonore est notamment liée au débit de fuite et de la distance d'audition), et l'homme du métier, à la lecture de ce qui suit, sera pleinement en mesure de dimensionner lesdits chemins d'échappement.

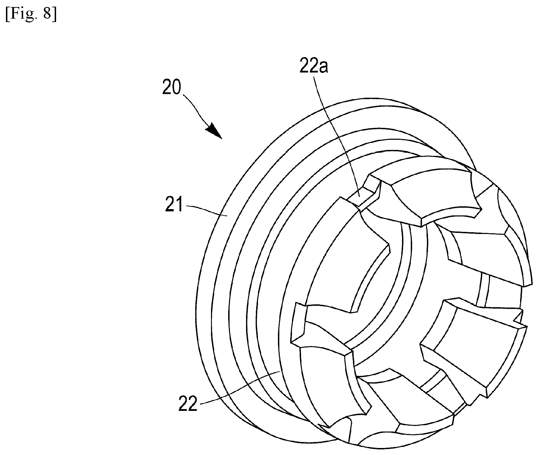

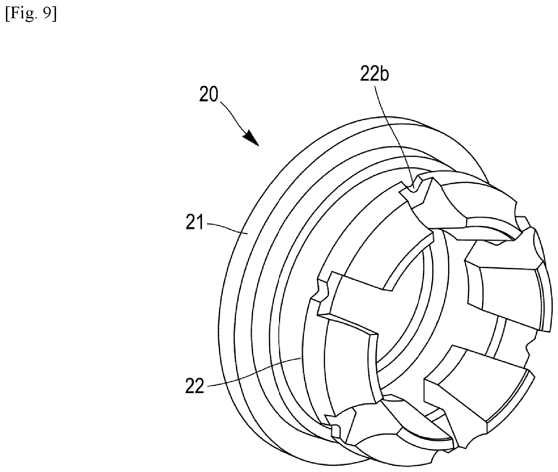

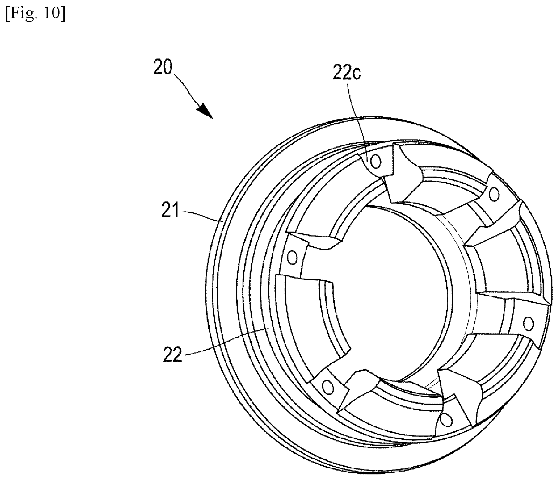

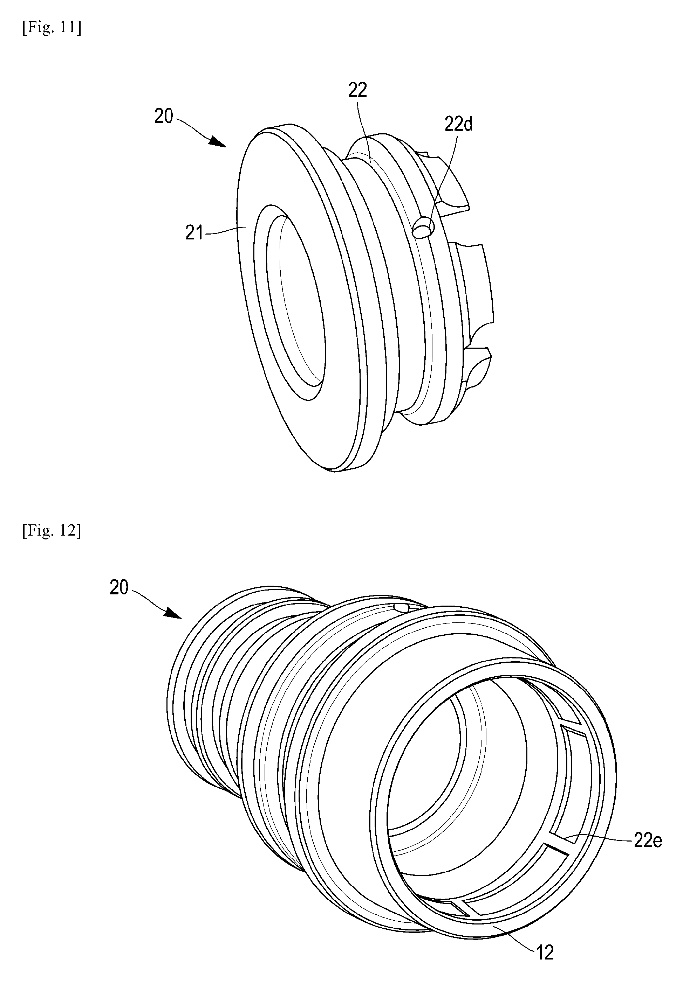

Ainsi, la figure 8, la figure 9, la figure 10 et la figure 11 illustrent quatre exemples de réalisation de chemin d'échappement. Notamment, la figure 8 et la figure 9 mettent en œuvre une encoche de grande taille 22a (figure 8) et des encoches de petite taille 22b (figure 9) formées sur un contour extérieur du collet d'encliquetage. La figure 10 et la figure 11 mettent en œuvre des trous 22c et 22d traversant le collet d'encliquetage selon la direction AA' (figure 10) et selon une direction radiale (figure 11).

De manière alternative, il peut être considéré de ménager des rainures 22e (orientées selon la direction AA') sur la surface internes du corps principal ménageant des chemins d'échappement entre la surface interne dudit corps et la surface externe de la bague de maintien (figure 11).

Le dispositif de raccordement selon la présente invention propose ainsi de combiner des chemins d'échappement et une bague de maintien limitant, voire prévenant, l'entrée de particules dans le logement. Le ou les chemins d'échappement contournent par ailleurs la bague de maintien, et sont par ailleurs dimensionnés pour qu'une onde sonore soit émise dès lors qu'ils sont traversés par un fluide sous pression. Enfin, le jeu de montage de la bague de maintien permet de compenser les tolérances de dimensionnement de ladite bague et du corps principal.

Les inventeurs ont pu tester l'efficacité des chemin d'échappement à révéler, par émission d'une onde sonore, la présence d'une fuite.

Notamment, les inventeurs ont pu, dans un premier temps constater qu'en absence de chemin d'échappement, aucun sifflement (ou émission d'onde sonore) n'est détectable en présence de fuite.

Toutefois, dès lors que la bague de maintien comprend un ou plusieurs perçages, et/ou une ou plusieurs encoches formés sur le collet d'encliquetage, un sifflement d'une intensité supérieure à 80 dB est détecté dès lors que le montage est fuyard. Notamment, un sifflement d'une intensité de 90 dB a été mesuré pour un montage soumis à une pression d'air égale à 12 bars. La présente invention permet ainsi la détection de fuites dans un environnement bruyant.

De manière avantageuse, les chemins d'échappement peuvent présenter, en cumul, une section supérieure ou égale à 1,5 mm². Cette section permet de détecter des fuites par émission d'un signal sonore dès lors que la pression du fluide considéré est de l'ordre de 12 bars.

Par « section du ou des chemins d'échappement », on entend la surface transversale dudit chemin d'échappement.

Il est entendu que pour des conditions de température, de pression ou encore de niveau sonore attendu, il peut être requis de redimensionner les chemins d' échappement (et notamment leur section transversale). Ces derniers aspects sont à la portée de l'homme du métier qui sur la base de ses connaissances générales dans les domaines de la thermodynamique et de l'acoustique pourra, selon les conditions imposées, dimensionner les chemins d'échappement et notamment les encoches et/ou perçages.

L'invention concerne également un procédé de raccordement d'un tube avec le dispositif de raccordement selon la présente invention.

Le procédé comprenant la connexion du dispositif de connexion par son extrémité 10b à un élément femelle. Le procédé comprend également la connexion d'un tube par insertion du tube dans le logement selon le sens d'insertion u, via la bague, et jusqu'à être en prise avec les moyens de verrouillage.
Le procédé comprend en outre un dimensionnement du chemin d'échappement pour permettre l'émission d'un signal sonore d'une intensité supérieure à 80 dB dès lors qu'une fuite de fluide intervient. Pour rappel, ce dimensionnement est accessible à l'homme du métier soit de manière théorique, en se basant sur la lois de la thermodynamique et de l'acoustique, ou de manière empirique et notamment en procédant à des mesures expérimentales. Il est également entendu que le dimensionnement considéré dépend de différents paramètres et notamment de la pression du fluide, de l'intensité du niveau sonore attendu en cas de fuite, du fluide considéré...

Bien entendu l'invention n'est pas limitée au(x) mode(s) de mise en œuvre décrit(s) et on peut y apporter des variantes de réalisation sans sortir du cadre de l'invention tel que défini par les revendications.

### RÉFÉRENCES

[1] WO2021148737A1 ;
[2] FR3021089A1 ;
[3] US10969041 B2;
[4] FR3128271 A1.

## Revendications

1. Dispositif de raccordement d'un tube (60) comprenant :
- un corps principal (10) définissant un logement (12) présentant une symétrie de révolution et pourvu d'une ouverture permettant l'insertion d'un tube (60) selon un sens d'insertion, le logement (12) est délimité par une surface interne (13) et comprend un premier épaulement formant un élargissement du logement (12) selon le sens d'insertion ;
- une bague de maintien (20) au moins partiellement insérée dans le logement (12) par l'ouverture et qui comprend, selon le sens d'insertion, une base (21), par exemple circulaire, et un tronçon de maintien (22) à symétrie de révolution d'un diamètre inférieur à l'étendue de la base (21), le tronçon de maintien (22) étant pourvu sur sa surface latérale d'un collet d'encliquetage (23) configuré pour permettre le maintien en prise par encliquetage de la bague de maintien (20) dans le logement (12) par coopération dudit collet avec le premier épaulement, ladite bague de maintien (20) définissant un canal (24) par lequel le tube (60) est destiné à être inséré dans le logement (12) ;
la bague de maintien (20) est montée dans le logement (12) avec un jeu axial non nul afin d'adopter soit une première position et soit une deuxième position, la première position imposant au collet d'être en appuis contre un premier épaulement selon un sens opposé au sens d'insertion, et la deuxième position imposant à la base (21) d'être en appui, selon le sens d'insertion, contre un moyen de buté formé sur le corps principal (10), des chemins d'échappement sont par ailleurs ménagés dans l'espace formé entre la surface latérale et la surface interne (13), et agencés pour permettre l'échappement, vers l'extérieur, d'un fluide susceptible d'être présent dans la chambre en aval de la bague de maintien (20) lorsque la bague, sous l'effet d'une pression susceptible d'être exercée par le fluide, est dans sa première position, les chemins d'échappement sont ménagés pour que l'écoulement dudit fluide dans lesdits chemins d'échappement génère l'émission d'une onde sonore.

2. Dispositif de raccordement selon la revendication 1, dans lequel les chemins d'échappement comprennent un ou plusieurs trou (22c, 22d) formés dans le collet d'encliquetage (23).

3. Dispositif de raccordement selon la revendication 1, dans lequel les chemins d'échappement comprennent une ou plusieurs encoches (22a, 22b) formés sur un contour extérieur du collet d'encliquetage (23).

4. Dispositif de raccordement selon la revendication 1, dans lequel les chemins d'échappement comprennent des rainures (22e) longitudinales formées sur la surface interne (13).

5. Dispositif de raccordement selon l'une des revendications 1 à 4, dans lequel ledit dispositif de raccordement comprend en outre guide (40) pourvu d'un manchon (41) qui s'étend à partir d'une extrémité libre (40a) dans le sens d'insertion, et qui est destiné à assurer le guidage du tube (60) lors de l'insertion de ce dernier dans le logement (12).

6. Dispositif de raccordement selon l'une des revendications 1 à 5, dans lequel ledit dispositif de raccordement comprend moyen de verrouillage disposé en aval de la bague de maintien (20) dans le logement (12) et destiné à être en prise avec un tube (60) inséré dans le logement (12), avantageusement, le moyen de verrouillage comprend une bague, dite bague de verrouillage.

7. Dispositif de raccordement selon la revendication 6, dans lequel un joint d'étanchéité (50) est disposé dans le logement (12) en aval du moyen de verrouillage, le joint d'étanchéité (50) est configuré pour assurer une étanchéité entre la surface interne (13) et une surface latérale du tube (60) susceptible d'être inséré dans le logement (12).

8. Dispositif de raccordement selon l'une des revendications 1 à 7, dans lequel un joint de propreté (25) est disposé dans le canal (24), le joint de propreté (25) est configuré permettre le retrait de saletés et/ou poussières susceptibles d'être présentes sur une surface latérale du tube (60) lors de son insertion dans le logement (12), avantageusement, le joint de propreté est également configuré pour assurer une étanchéité entre une surface interne du tronçon de maintien (22) et la surface latérale du tube (60) susceptible d'être inséré dans le logement (12) de manière à prévenir tout échappement de fluide susceptible d'être présent dans la chambre en aval de la bague de maintien (20) lorsque la bague, sous l'effet d'une pression susceptible d'être exercée par le fluide, est dans sa première position.

9. Dispositif de raccordement selon l'une des revendications 1 à 8, dans lequel la base (21) est configurée pour, lorsqu'elle est en appui contre les moyens de buté, limiter, voire prévenir, l'entrée de poussière dans le logement (12).

10. Dispositif de raccordement selon les des revendications 1 à 9, dans lequel les moyens de buté sont formés par un bord du corps principal (10) délimitant l'ouverture du logement (12).

11. Dispositif de raccordement selon les revendications 1 à 9, dans lequel les moyens de buté sont formée par un deuxième épaulement formé sur la surface interne (13).
